# EUROPEAN PATENT APPLICATION

(11) **EP 1 811 220 A2**
(43) Date of publication of application: **25.07.2007**
(21) Application number: 07100251.3
(22) Date of filing: 08.01.2007
(51) Int. Cl.: F16L 13/02

(54) **Method for joining tubular elements made of stainless steel, an alloy thereof, aluminum or other equivalent metallic materials**

(30) Priority: 18.01.2006 IT PD20060016
(71) Applicant: Liebert Hiross S.p.A., 35028 Piove di Sacco PD (IT)
(72) Inventor: Grigoletto, Giuliano, 35020, Brugine PD (IT); Furlan, Giancarlo, 35126, Padova (IT); Lazzarato, Moreno, 35020, Brugine PD (IT)
(74) Representative: Modiano, Micaela Nadia

(57) **Abstract**

A method for joining tubular elements made of stainless steel, an alloy thereof, aluminum or other equivalent metallic materials, particularly for providing coolant gas piping for refrigeration systems, comprising the steps of:
- deforming a first head portion (11a) of a first tubular element (11) so as to reduce its outside diameter to a size which allows its insertion in a second head portion (12a) of a second tubular element (12) to be joined to the first tubular element (11),
- inserting the first head portion (11a) in the second head portion (12a), so that a welding channel (15) is formed between the end (13) of the second head portion (12a) and the facing connecting portion (14) between the tubular body (11b) and the first head portion (11a) of the first tubular element (11a),
- performing a welding operation with the addition of material between the first element (11) and the second element (12) inside the welding channel (15).

## Description

The present invention relates to a method for joining tubular elements made of stainless steel, an alloy thereof, aluminum or other equivalent metallic materials, particularly for providing piping for coolant gases for refrigeration systems.

Currently, the stainless steel piping of industrial refrigeration systems is obtained generally by joining the tubular elements that compose it by means of a butt weld after the facing mouths of the tubular elements to be mated have been worked appropriately, for example by beveling.

The welding operation is of the type known as TIG (Tungsten Inert Gas) and is performed on the outside of the mouths to be joined, which are pressed against each other.

An operation for injecting gas, for example argon or inert gases, into the mutually welded tubular elements is associated with the TIG welding operation; such gas injection is intended to remove the protruding portions of the part of the welding bead that protrudes internally, which if not removed beforehand detach during use of the system in which the welded elements are inserted, with the risk of damaging it seriously.

Although this joining method is used extensively, it has drawbacks, the first of which is closely linked to the complex geometry of said piping, which typically has many bends.

To join two tubular elements with a butt weld it is in fact necessary to prepare appropriately provided templates which keep the two elements to be welded correctly arranged coaxially, since a geometrically incorrect coupling increases the difficulty of assembling the entire line to which the two elements belong.

Further, such operation for injecting gas for removing the protruding portions from the welding bead requires a certain amount of time, which increases the production times of the refrigeration system, and an expense in terms of injected gas.

The aim of the present invention is to provide a method for joining tubular elements for providing refrigeration system gas piping made of steel which allows to join two tubular elements quickly, cheaply and with higher precision than conventional methods.

Within this aim, an object of the present invention is to provide a joining method which improves the mechanical strength of the resulting joint.

Another object of the present invention is to provide a joining method which allows to use faster and cheaper welding operations than known methods.

Another object of the present invention is to provide a joining method which reduces the formation of protruding portions within the welded tubular elements, protecting the integrity and functionality of the system to which said tubular elements belong.

Another object of the present invention is to provide a method for joining tubular elements for providing gas piping for refrigeration systems which can be produced economically with known systems and technologies.

This aim and these and other objects, which will become better apparent hereinafter, are achieved by a method for joining tubular elements made of stainless steel, an alloy thereof, aluminum or other equivalent metallic materials, particularly for providing coolant gas piping for refrigeration systems, which comprises the steps of:
- deforming a first head portion of a first tubular element so as to reduce its outside diameter to a size which allows its insertion in a second head portion of a second tubular element to be joined to said first tubular element,
- inserting said first head portion in said second head portion, so that a welding channel is formed between the end of said second head portion and the facing connecting portion between the tubular body and the first head portion of said first tubular element,
- performing a welding operation with the addition of material between the first and second elements inside said welding channel.

Further characteristics and advantages of the invention will become better apparent from the following detailed description of a preferred but not exclusive embodiment thereof, illustrated by way of non-limiting example in the accompanying drawings, wherein:
Figure 1 is a view of the head portions of two tubular elements to be joined;
Figure 2 is a view of the two head portions after a first step of the method according to the invention;
Figure 3 is a view of the two head portions, joined at the end of the method according to the invention.

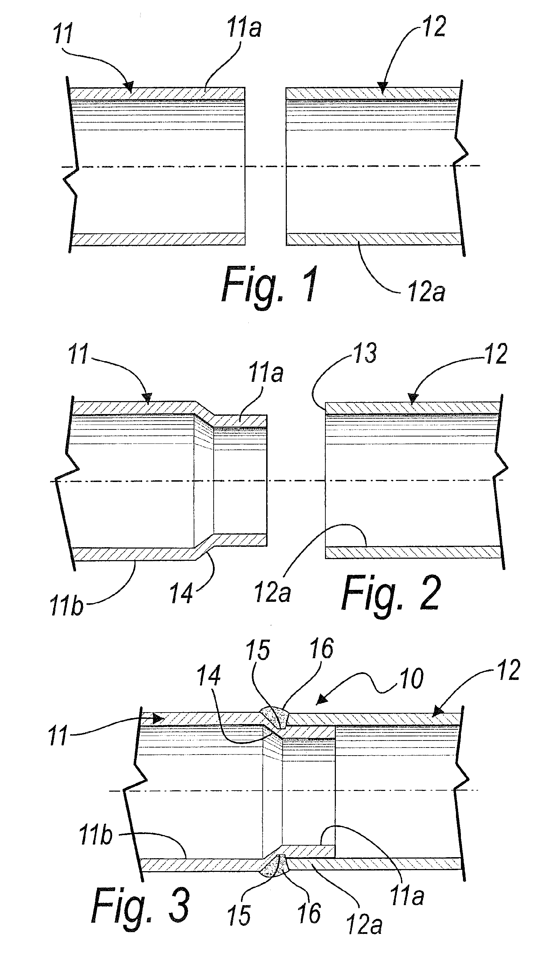

With reference to the figures, two tubular elements to be joined with a method for joining tubular elements made of stainless steel, an alloy thereof, aluminum or other equivalent metallic materials according to the invention are designated respectively by the reference numerals 11 and 12, while the final joint, shown in Figure 3, is designated by the reference numeral 10.

The method according to the invention comprises a first operation, which consists in deforming a first head portion 11 a of the first tubular element 11 so as to reduce its outside diameter to a size which allows its insertion in a second head portion 12a of the second tubular element 12 to be joined to the first tubular element 11.

Such first operation for deforming the first head portion 11a is performed cold by means of a rolling machine of a per se known type.

The method then comprises a second operation, which consists in inserting the first head portion 11 a, which has a reduced cross-section, in the second head portion 12a.

In this manner, a welding channel 15 is formed between the end 13 of the second head portion 12a and the facing portion 14 connecting the tubular body 11b and the first head portion 11a of the first tubular element 11.

Subsequently, welding is performed between the first and second elements 11 and 12 within the welding channel 15.

Such welding operation is of the TIG type and forms a welding bead which is designated by the referenced numeral 16 in Figure 3.

As an alternative, the welding operation is constituted by braze welding.

The first head portion 11a is contoured so as to enter the second head portion 12a, preferably with interference.

In this manner, any scale that forms as a consequence of welding on the inside of the welding bead cannot reach the inside of the tubular elements 11 and 12 thanks to the overlap of the head portions 11a and 12a.

This allows to spare the onerous operation of injecting gas into the joined tubular elements in order to remove the protruding portions from the welding bead, with important savings in terms of production times of the refrigeration system and in terms of costs related to the purchase of the gas to be injected.

A similar method for joining pipes in which the refrigeration fluid flows is currently known in the refrigeration industry.

These pipes are generally made of copper, not steel, an alloy thereof or aluminum, and are joined with a spigot-joint braze welding operation, i.e. by flaring or expanding the head portion of one of the tubular elements to be joined, the head portion of the second tubular element to be joined being inserted in the flared head portion.

This method is applied to tubular elements having a small diameter and made of a metal, copper, which is relatively easy to deform plastically.

The method according to the invention instead provides for the plastic deformation of tubular elements made of stainless steel which have a large diameter, up to 10 centimeters or more, an operation which is generally believed to be scarcely convenient in the refrigeration industry due to difficulty in performing cold deformation and to the consequent expense.

This method is particularly adapted for tubular elements having a relatively large diameter and a low thickness, and therefore for the provision of piping for low-pressure refrigerating gases.

The method according to the invention therefore allows to obtain a series of advantages, the most important of which are:
- greater ease in assembling the tubular elements with respect to known types of butt welding method; by way of the rolling of a first head portion of a first one of the two tubular elements, the two elements in fact mate so as to mutually self-center without the aid of appropriately manufactured templates;
- improved flexural and shear strength of the final joint 10; accordingly, the choice of the dimensions of the thickness of the tubular elements that compose the line can be based only on the operating pressures applied by the coolant gas that must flow therein; this allows to reduce the thicknesses of the tubular elements with respect to the thicknesses imposed with known types of joining method, with important savings in terms of raw materials;
- execution of TIG welding without injecting gas into the welded tubular elements, with a saving in terms of gas and working times;
- great reduction, or even elimination, of any internal scale due to welding, on the joined tubular elements, with consequent reduction of the risk of damage to the line and to the refrigeration system as a whole;
- elimination of the beveling operation for the head portions of the tubular elements to be joined; in the method according to the invention, the ends of the tubular elements are the result of simple cutting operations.

In practice it has been found that the invention thus described solves the problems noted in conventional methods for joining metallic tubular elements for providing gas piping for refrigeration systems.

In particular, the present invention provides a method for joining tubular elements made of stainless steel, an alloy thereof, aluminum or other equivalent metallic materials, particularly for providing coolant gas piping for refrigeration systems, which allows to join two tubular elements rapidly, cheaply and more precisely than conventional methods.

Moreover, the present invention provides a joining method which improves the mechanical strength of the resulting joint.

Further, the present invention provides a joining method which allows faster and cheaper welding operations than known methods.

Further, the present invention provides a joining method which reduces the formation of protruding portions inside the welded tubular elements, protecting the integrity and functionality of the refrigeration system to which said tubular elements belong.

Moreover, the present invention provides a method for joining tubular elements for providing gas piping for refrigeration systems which can be performed cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000016 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for joining tubular elements made of stainless steel, an alloy thereof, aluminum or other equivalent metallic materials, particularly for providing coolant gas piping for refrigeration systems, which comprises the steps of:
- deforming a first head portion (11a) of a first tubular element (11) so as to reduce its outside diameter to a size which allows its insertion in a second head portion (12a) of a second tubular element (12) to be joined to said first tubular element (11),
- inserting said first head portion (11a) in said second head portion (12a), so that a welding channel (15) is formed between the end (13) of said second head portion (12a) and the facing connecting portion (14) between the tubular body (11b) and the first head portion (11a) of said first tubular element (11a),
- performing a welding operation with the addition of material between the first element (11) and the second element (12) inside said welding channel (15).

2. The method according to claim 1, **characterized in that** said welding operation is of the TIG type.

3. The method according to claim 1, **characterized in that** said welding operation is braze welding.

4. The method according to the preceding claims, **characterized in that** said operation for deforming said first end portion (11a) is performed cold by means of a rolling machine.

5. The method according to the preceding claims, **characterized in that** said first head portion (11a) is shaped so as to enter said second head portion (12a) with interference.
